# EUROPEAN PATENT SPECIFICATION

(11) **EP 0 504 985 B1**
(45) Date of publication and mention of the grant of the patent: **08.07.1998**
(21) Application number: 92200704.2
(22) Date of filing: 11.03.1992
(51) Int. Cl.: C08G 67/02

(54) **Polymers of carbon monoxide with unsaturated compounds**
Polymere aus Kohlenmonoxid und ungesättigten Verbindungen
Polymères préparés à partir du monoxyde de carbone et de composés non-saturés

(30) Priority: 21.03.1991 NL 9100502
(43) Date of publication of application: 23.09.1992
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL)

(56) References cited:
- EP-A- 0 121 965
- EP-A- 0 181 014
- EP-A- 0 315 266
- EP-A- 0 357 101
- US-A- 5 049 650

## Description

The invention relates to novel polymers of carbon monoxide with one or more olefinically unsaturated compounds.

It is known that linear polymers of carbon monoxide with one or more α-mono-olefins in which polymers the units from carbon monoxide and the units from the olefins are present in a substantially alternating arrangement can be prepared by contacting the monomers with a catalyst composition containing a Group VIII metal and either a phosphorus bidentate ligand of the general formula R¹R²P-R-PR³R⁴ or a nitrogen bidentate ligand of the general formula 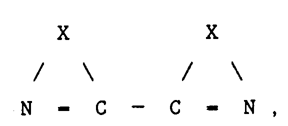 in which general formulae R¹ to R⁴ represent identical or different optionally polar substituted monovalent aromatic hydrocarbyl groups, R represents a divalent organic bridging group containing at least two carbon atoms in the bridge connecting the two phosphorus atoms and X represents an organic bridging group containing three or four atoms in the bridge, at least two of which are carbon atoms. Examples of suitable bidentate ligands are 1,3-bis(diphenylphosphino)propane, 1,3-bis[bis(2-methoxyphenyl)phosphino]propane, 2,2'-dipyridyl and 1,10-phenanthroline.

EP-A-0181014 and EP-A-0121965 disclose processes for the preparation of alternating copolymers of carbon monoxide and olefinically unsaturated hydrocarbons, e.g. dialkenes in which the two unsaturated groups are not conjugated.

The above-mentioned polymers contain carbonyl groups as functional groups. At least part of these carbonyl groups can be converted by chemical reaction into other functional groups. This chemical modification changes the properties of the polymers and makes them suitable for applications for which the original polymers were not or less suitable.

The applicant recently carried out an investigation into the introduction of olefinic double bonds into the above-mentioned polymers with the aim of thereby obtaining polymers which are eligible for cross-linking and further chemical modification. Initially, it was attempted to achieve the desired goal by converting a part of the carbonyl groups present in the polymers into hydroxyl groups, followed by catalytic dehydrogenation. It was found, however, that this is not a suitable route for introducing olefinic double bonds into these polymers. The occurrence of side reactions gives rise to a mixture of polymers in which the linear character of the polymers is largely lost, whereas the introduction of olefinic double bonds remains limited to a minimum.

In the course of the applicant's research into this subject, it was subsequently attempted to achieve the desired goal by incorporating in the monomer mixture from which these polymers are prepared, in addition to carbon monoxide and one or more α-mono-olefins, one or more α,ω-diolefins of the general formula CH₂=CH-R⁵ in which R⁵ represents a hydrocarbenyl group, i.e. a hydrocarbyl group containing one olefinic double bond. Depending on the positions of the two double bonds relative to each other in the molecule, the aforesaid diolefins can be divided into two classes, viz.:
a) α,ω-Diolefins of the general formula CH₂=CH-R⁶ in which R⁶ represents a 1-hydrocarbenyl group and in which diolefins the two olefinic double bonds are conjugated, such as butadiene-1,3, and
b) α,ω-Diolefins of the general formula CH₂=CH-R⁷ in which R⁷ represents any hydrocarbenyl group, except a 1-hydrocarbenyl, and in which diolefins the two olefinic double bonds are (non-vicinal and) non-conjugated, such as pentadiene-1,4, hexadiene-1,5 and octadiene-1,7.

From the earlier investigation into the use of the above-mentioned diolefins as comonomers in the polymerization of carbon monoxide with one or more α-mono-olefins it has been found that both when using catalyst compositions containing a phosphorus bidentate ligand of the general formula R¹R²P-R-PR³R⁴ and when using catalyst compositions containing a nitrogen bidentate ligand of the general formula 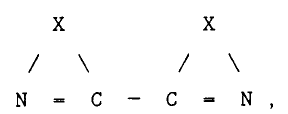 polymers can be prepared in which the units from carbon monoxide and the units from the mono-and diolefins are present in a substantially alternating arrangement and in which the units from the mono-olefins and the units from the diolefins are present in a random arrangement relative to one another. It was also found from the investigation that the result obtained is dependent to a large extent on whether the diolefin used belongs to class a) or to class b). If a diolefin belonging to class a) is used, only a small quantity of the diolefin is built into the polymers and the polymerization rate is low (cf. EP-A-315266). If a diolefin belonging to class b) is used, a considerably larger quantity of the diolefin is built into the polymers and the polymerization rate is substantially higher (cf. EP-357101).

In the course of continued research into this subject by the applicant, it was recently investigated to which extent, using the previously mentioned catalyst compositions, polymers can be prepared starting from a monomer mixture that in addition to carbon monoxide contains only one or more diolefins (i.e. in the absence of one or more α-mono-olefins). In view of the previously observed differences in diolefin incorporation and polymerization rate when using diolefins belonging to class a) and b) as comonomers, it was decided to use diolefins belonging to class b) for this purpose.

The initial results of this research were disappointing. Neither when using catalyst compositions containing the previously mentioned phosphorus bidentate ligands nor when using catalyst compositions containing the previously mentioned nitrogen bidentate ligands could polymers be prepared from a mixture consisting only of carbon monoxide and a diolefin belonging to class b).

It has now, however, surprisingly been found that polymers of carbon monoxide with one or more diolefins belonging to class b) can be prepared by contacting the monomers with a catalyst composition containing a Group VIII metal and as bidentate ligand a phosphorus bidentate ligand of the general formula R⁸R⁹P-R-PR¹⁰R¹¹ in which R⁸ to R¹¹ represent identical or different optionally polar substituted aliphatic hydrocarbyl groups and R has the previously indicated meaning. The last mentioned catalyst compositions were also found suitable for the polymerization of carbon monoxide with one or more α-mono-olefins. This results, just as with the catalyst compositions containing a phosphorus bidentate ligand of the general formula R¹R²P-R-PR³R⁴, in polymers in which the units from carbon monoxide on the one hand and the units from the α-mono-olefins on the other hand are present in a substantially alternating arrangement. These polymers are therefore characterized in that in the polymer chains on either side of each unit originating from an α-mono-olefin one unit from carbon monoxide is present, so that the carbon monoxide/α-mono-olefin molar ratio of the polymers is equal to unity.

In the preparation of the polymers of carbon monoxide with one or more diolefins belonging to class b), polymers are also obtained which are characterized in that in the polymer chains substantially on either side of each unit originating from a diolefin one unit from carbon monoxide is present. As regards the carbon monoxide/olefin molar ratio of these polymers, it was found that as a result of the presence of two olefinic double bonds, this can vary between 1 and 2, depending on the structure of the diolefin chosen as monomer in the polymerization. It was found, for example, that the polymerization of carbon monoxide with hexadiene-1,5 led to a polymer in which in the polymer chains on either side of each unit from hexadiene-1,5 one unit from carbon monoxide is present, but in which, moreover, a large part of the units from hexadiene-1,5 had reacted with carbon monoxide to form a cyclic ketone structure such as a 2,5-di(methylene)cyclopentanone structure. As a result of this cyclization, the polymer possesses a carbon monoxide/olefin molar ratio greater than unity. The same effect was observed in the polymerization of carbon monoxide with heptadiene-1,6 and in the polymerization of carbon monoxide with octadiene-1,7. In these polymerizations as well, polymers are formed in which on either side of each unit from the diolefin a unit from carbon monoxide is present, but in which, moreover, a part of the units from the diolefins had reacted with carbon monoxide to form cyclic ketone structures. As a result of this cyclization, these polymers also possess a carbon monoxide/olefin molar ratio greater than unity.

Polymers of carbon monoxide with one or more diolefins belonging to class b) in which polymers substantially on either side of each unit from a diolefin one unit from carbon monoxide is present are novel.

The present patent application therefore relates to novel polymers of carbon monoxide with one or more olefinically unsaturated compounds, which polymers satisfy the following criteria:
a) they can be prepared by copolymerization of carbon monoxide with, as olefinically unsaturated compounds, exclusively one or more α,ω-diolefins of the general formula CH₂=CH-R⁷ in which R⁷ represents a hydrocarbenyl group containing one olefinic double bond and in which α,ω-diolefins the two olefinic double bonds are non-conjugated, and
b) in the polymer chains substantially on either side of each unit from an α,ω-diolefin one unit from carbon monoxide is present.

The patent application further relates to a process for the preparation of these novel polymers by contacting the monomers with a catalyst composition containing a Group VIII metal and a phosphorus bidentate ligand of the general formula R⁸R⁹P-R-PR¹⁰R¹¹.

The starting monomer mixture for the preparation of the polymers of the invention can contain one or more monomers of the general formula CH₂=CH-R⁷. There is preference for the use of monomer mixtures containing only one monomer of the general formula CH₂=CH-R⁷. In the monomers of the general formula CH₂=CH-R⁷, R⁷ is preferably an aliphatic hydrocarbenyl group, especially an alkenyl group, which contains not more than 10 carbon atoms. Examples of suitable monomers of the general formula CH₂=CH-R⁷ are pentadiene-1,4, hexadiene-1,5, heptadiene-1,6, octadiene-1,7, 2-methylpentadiene-1,4, and 2-methyloctadiene-1,7. As diolefins of the general formula CH₂=CH-R⁷, unbranched α,ω-diolefins are preferably used. Very suitable diolefins of this type are hexadiene-1,5, heptadiene-1,6 and octadiene-1,7. The alkenyl group R⁷ then has the formula -(CH₂)ₙ-CH=CH₂ in which n = 2, 3 or 4.

Part of the repeating units in the copolymers thus has the general formula (̵CO-CH₂-CH(R⁷)̵, whereas another part of the repeating units is cyclised. In the case of unbranched α,ω-diolefins, R⁷ has the formula -(CH₂)ₙ-CH=CH₂, and this yields cycloketone units of formula

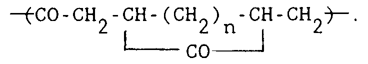

As pointed out above, the polymers of the invention can be prepared by contacting the monomers with a catalyst composition containing a Group VIII metal and a phosphorus bidentate ligand of the general formula R⁸R⁹P-R-PR¹⁰R¹¹.

In this patent application, Group VIII metals are understood to be the noble metals ruthenium, rhodium, palladium, osmium, iridium and platinum, as well as the iron group metals iron, cobalt and nickel. In the catalyst compositions used in the polymer preparation according to the invention the Group VIII metal is preferably selected from palladium, nickel and cobalt. Palladium is particularly preferred as Group VIII metal. The incorporation of the Group VIII metal in the catalyst compositions preferably takes place in the form of a salt of a carboxylic acid, of e.g. up to four carbonatoms, in particular in the form of an acetate.

In the phosphorus bidentate ligands of the general formula R⁸R⁹P-R-PR¹⁰R¹¹ which are eligible for use in the catalyst compositions, the groups R⁸ to R¹¹ preferably each contain not more than 10 carbon atoms. Very suitable catalyst compositions for the present purpose are those which contain a phosphorus bidentate ligand in which the groups R⁸ to R¹¹ are identical alkyl groups. If desired, the groups R⁸ and R⁹ on the one hand and the groups R¹⁰ and R¹¹ on the other hand can be linked to each other by a carbon-carbon bond, so that they, together with the phosphorus atom to which they are joined, form a heterocyclic phosphorus-containing group, such as 1,3-bis(3,4-dimethoxy-1-phosphacyclopentyl)propane. As regards the bridging group R in the phosphorus bidentate ligands, there is preference for bridging groups containing three atoms in the bridge, of which at least two are carbon atoms. Examples of suitable bridging groups R are the -CH₂-CH₂-CH₂- group, the -CH₂-C(CH₃)₂-CH₂- group and the -CH₂-Si(CH₃)₂-CH₂- group. Worth mentioning as a very suitable phosphorus bidentate ligand for application in the present catalyst compositions is 1,3-bis(di-n-butylphosphino)propane. The phosphorus bidentate ligands in the catalyst compositions are preferably employed in a quantity of 0.5-2 and in particular 0.75-1.5 mol per g.atom Group VIII metal.

In addition to the Group VIII metal and the phosphorus bidentate ligand, the catalyst compositions used in the preparation of the polymers of the invention preferably also contain an anion of an acid with a pKa of less than 4 and in particular an anion of an acid with a pKa of less than 2. Examples of acids with a pKa of less than 2 are mineral acids such as perchloric acid, sulphonic acids such as trifluoromethanesulphonic acid and halocarboxylic acids such as trifluoroacetic acid. A sulphonic acid such as trifluoromethanesulphonic acid is preferred. The incorporation of the anion of an acid with a pKa of less than 4 in the catalyst composition can take place in the form of an acid and/or in the form of a salt. A nickel salt is very suitable as a salt. The anion is preferably present in the catalyst compositions in a quantity of 1-100 and in particular 2-50 mol per g.atom Group VIII metal.

In addition to the Group VIII metal, the phosphorus bidentate ligand and the optional anion of an acid with a pKa of less than 4, the catalyst compositions which are eligible for use in the preparation of the polymers of the invention also preferably contain an organic oxidizing agent. Examples of suitable organic oxidizing agents are 1,2- and 1,4-quinones, aliphatic nitrites such as butyl nitrite and aromatic nitro compounds such as nitrobenzene and 2,4-dinitrotoluene. 1,4-quinones are preferred, and in particular 1,4-benzoquinone and 1,4-naphthoquinone. The organic oxidizing agent is preferably present in the catalyst compositions in a quantity of 5-5000 and in particular 10-1000 mol per g.atom Group VIII metal.

The preparation of the polymers of the invention is preferably carried out by contacting the monomers with a solution of the catalyst composition in a diluent in which the polymers are insoluble or virtually insoluble. Lower aliphatic alcohols, and in particular methanol, are very suitable as diluents. If desired, the polymerization can also be carried out in the gas phase. The polymerization can take place either batchwise or continuously.

The quantity of catalyst composition used in the preparation of the polymers can vary within wide limits. Per mol of olefinically unsaturated compound to be polymerized a quantity of catalyst composition is preferably used which contains 10⁻⁷-10⁻³ and in particular 10⁻⁶-10⁻⁴ g.atom Group VIII metal.

The preparation of the polymers is preferably carried out at a temperature of 20-150°C and a pressure of 2-150 bar and in particular at a temperature of 30-130°C and a pressure of 5-100 bar. The molar ratio of the olefinically unsaturated compounds relative to the carbon monoxide is preferably 10:1-1:10 and in particular 5:1-1:5.

The invention will now be illustrated with reference to the following examples:

### Example 1

A carbon monoxide/hexadiene-1,5 copolymer was prepared as follows. Into a stirred autoclave with a volume of 250 ml a catalyst solution was introduced consisting of:
100 ml methanol,
0.1 mmol palladium acetate,
0.5 mmol nickel perchlorate, and
0.12 mmol 1,3-bis(di n-butylphosphino)propane.

After air had been removed from the autoclave by evacuation, 20 ml hexadiene-1,5 was introduced. Carbon monoxide was then forced in until a pressure of 40 bar was attained. Finally the contents of the autoclave were heated to 50 °C. After 5 hours the polymerization was terminated by cooling to room temperature and releasing the pressure. The polymer formed was filtered off, washed with methanol and dried. 4 g copolymer was obtained.

### Example 2

A carbon monoxide/hexadiene-1,5 copolymer was prepared in substantially the same way as in example 1, but with the following differences:
a) the reaction temperature was 22 °C instead of 50 °C, and
b) the reaction time was 15 hours instead of 5 hours. 3 g copolymer was obtained.

### Example 3

A carbon monoxide/heptadiene-1,6 copolymer was prepared in substantially the same way as the carbon monoxide/hexadiene-1,5 copolymer in example 1, but with the difference that 10 ml heptadiene-1,6 was introduced into the autoclave instead of hexadiene-1,5. 2 g copolymer was obtained.

### Example 4

A carbon monoxide/octadiene-1,7 copolymer was prepared in substantially the same way as the carbon monoxide/hexadiene-1,5 copolymer in example 1, but with the following differences:
a) 20 ml octadiene-1,7 was introduced into the autoclave instead of hexadiene-1,5, and
b) the reaction temperature was 35 °C instead of 50 °C. 3 g copolymer was obtained.

### Example 5

A carbon monoxide/octadiene-1,7 copolymer was prepared in substantially the same way as the carbon monoxide/hexadiene-1,5 copolymer in example 1, but with the following differences:
a) 20 ml octadiene-1,7 was introduced into the autoclave instead of hexadiene-1,5, and
b) the reaction temperature was 22 °C instead of 50 °C, and
c) the reaction time was 18 hours instead of 5 hours. 2 g copolymer was obtained.

### Example 6

Example 1 was substantially repeated, but with the following differences:
a) a catalyst solution was used consisting of:
   100 ml methanol,
   0.1 mmol palladium acetate,
   2 mmol para-toluenesulphonic acid,
   3 mmol 2,2'-dipyridyl,
   10 mmol 1,4-benzoquinone, and
b) the reaction temperature was 70 °C instead of 50 °C.

No polymer was formed.

### Example 7

Example 1 was substantially repeated, but with the difference that a catalyst solution was used consisting of:
100 ml methanol,
0.1 mmol palladium acetate,
0.5 mmol nickel perchlorate,
0.12 mmol 1,3-bis(diphenylphosphino)propane, and 5 mmol 1,4-naphthoquinone.

No polymer was formed.

### Example 8

A carbon monoxide/ethene/hexadiene-1,5 terpolymer was prepared as follows. Into a stirred autoclave with a volume of 250 ml a catalyst solution was introduced consisting of:
50 ml methanol,
0.1 mmol palladium acetate,
2 mmol trifluoroacetic acid, and
0.15 mmol 1,3-bis[bis(2-methoxyphenyl)phosphino]propane.

After air had been removed from the autoclave by evacuation, 10 ml hexadiene-1,5 was introduced. Carbon monoxide was then forced in until a pressure of 30 bar was reached and then ethene until a pressure of 45 bar was reached. Finally the contents of the autoclave were heated to 80 °C. After 5 hours the polymerization was terminated by cooling to room temperature and releasing the pressure. The polymer formed was filtered off, washed with methanol and dried. 7.7 g terpolymer was obtained.

### Example 9

A carbon monoxide/ethene/hexadiene-1,5 terpolymer was prepared in substantially the same way as in example 8, but with the following differences:
a) a catalyst solution was used consisting of:
   15 ml methanol,
   0.1 mmol palladium acetate,
   1 mmol para-toluenesulphonic acid,
   3 mmol 2,2'-dipyridyl,
   20 mmol 1,4-benzoquinone, and
b) the reaction temperature was 70 °C instead of 80 °C. 8.8 g terpolymer was obtained.

Of the examples 1-9, examples 1-5 are according to the invention. In these examples, novel copolymers of carbon monoxide with one of the following monomers were prepared: hexadiene-1,5, heptadiene-1,6 and octadiene-1,7 using catalysts containing a Group VIII metal and a phosphorus bidentate ligand of the general formula R⁸R⁹P-R-PR¹⁰R¹¹. Examples 6-9 are included in the patent application for comparison. Examples 8 and 9 demonstrate the suitability of catalysts containing a Group VIII metal and either a phosphorus bidentate ligand of the general formula R¹R²P-R-PR³R⁴ or a nitrogen bidentate ligand of the general formula 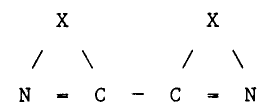 for the preparation of carbon monoxide/ethene/hexadiene-1,5 terpolymers. Examples 6 and 7 demonstrate that these catalysts are unsuitable for the preparation of the novel copolymers according to the invention.

NMR analysis of the polymers prepared provided the following information:
1) In the copolymers prepared according to examples 1 and 2, the units from hexadiene-1,5 were present substantially in a cycloketone structure. No olefinic double bonds were observed in these copolymers. Thus carbonyl units alternated with 2,5-dimethylenecyclopentanone units.
2) In the copolymers prepared according to example 3, the units from heptadiene-1,6 were largely present in a cyclic ketone structure. In these copolymers about 10% of the olefinic double bonds originally present in the diolefin were still present as such.
3) In the copolymers prepared according to examples 4 and 5, the units from octadiene-1,7 were present to some extent in a cyclic ketone structure. In these copolymers about 20% of the olefinic double bonds originally present in the diolefin were still present as such.
4) In the copolymers prepared according to examples 1-5, one unit from carbon monoxide was present on either side of each unit from the diolefin used.
5) In the terpolymers prepared according to examples 8 and 9, one unit from carbon monoxide was present on either side of each unit from a mono- or diolefin. In these terpolymers the units from ethene and the units from hexadiene-1,5 were present in a random arrangement relative to one another. Per 100 units originating from ethene, an average of 2 and 7 units respectively from hexadiene-1,5 were present in the terpolymers.

## Claims

1. Polymers of carbon monoxide with one or more olefinically unsaturated compounds, characterized in that
a) they can be prepared by copolymerization of carbon monoxide with, as olefinically unsaturated compounds, exclusively one or more α,ω-diolefins of the general formula CH₂=CH-R⁷ in which R⁷ represents a hydrocarbenyl group containing one olefinic double bond and in which α,ω-diolefins the two olefinic double bonds are non-conjugated, and
b) in the polymer chains one unit from carbon monoxide is present substantially on either side of each unit from an α,ω-diolefin.

2. Polymers according to claim 1, characterized in that the monomer mixture contains only one compound of the general formula CH₂=CH-R⁷.

3. Polymers according to claim 1 or 2, characterized in that in the monomers of the general formula CH₂=CH-R⁷ the group R⁷ is an aliphatic hydrocarbenyl group containing not more than 10 carbon atoms.

4. Polymers according to one or more of claims 1-3, characterized in that the monomers of the general formula CH₂=CH-R⁷ are unbranched α,ω-diolefins.

5. Polymers according to claim 4, characterized in that the unbranched α,ω-diolefins are selected from hexadiene-1,5, heptadiene-1,6 and octadiene-1,7.

6. Process for the preparation of polymers, characterized in that polymers according to claim 1 are prepared by contacting the monomers with a catalyst composition containing a Group VIII metal and a phosphorus bidentate ligand of the general formula R⁸R⁹P-R-PR¹⁰R¹¹ which R⁸ to R¹¹ represent identical or different optionally polar substituted aliphatic hydrocarbyl groups and R represents a divalent bridging group containing at least two carbon atoms in the bridge connecting the two phosphorus atoms.

7. Process according to claim 6, characterized in that the catalyst composition contains the phosphorus bidentate ligand in a quantity of 0.5-2 mol per g.atom Group VIII metal.

8. Process according to claim 6 or 7, characterized in that the catalyst composition additionally contains an anion of an acid with a pKa of less than 4, in the form of an acid and/or a salt.

9. Process according to claim 8, characterized in that the anion of an acid with a pKa of less than 4 is incorporated in the catalyst composition in a quantity of 1-100 mol per g.atom Group VIII metal.

10. Process according to one or more of claims 6-9, characterized in that the polymerization is carried out by contacting the monomers with a solution of the catalyst composition in a diluent in which the polymers are insoluble or virtually insoluble, at a temperature of 20-150 °C, a pressure of 2-150 bar and a molar ratio of the olefinically unsaturated compounds relative to carbon monoxide of 10:1-1:10 and using a quantity of catalyst composition which per mol of olefinically unsaturated compound to be polymerized contains 10⁻⁷-10⁻³ g.atom Group VIII metal.

## Patentansprüche

1. Polymere aus Kohlenmonoxid und einer oder mehreren olefinisch ungesättigten Verbindungen, dadurch gekennzeichnet, daß
a) sie durch Copolymerisation von Kohlenmonoxid mit - als olefinisch ungesättigten Verbindungen - ausschließlich einem oder mehreren α,ω-Diolefinen mit der allgemeinen Formel CH₂=CH-R⁷, worin R⁷ eine Hydrocarbenylgruppe darstellt, die ein olefinische Doppelbindung enthält, und in welchen α,ω-Diolefinen die beiden olefinischen Doppelbindungen nicht konjugiert sind, hergestellt werden können, und
b) in den Polymerketten eine Einheit aus Kohlenmonoxid im wesentlichen auf beiden Seiten jeder Einheiten aus einem α,ω-Diolefin vorliegt.

2. Polymere nach Anspruch 1, dadurch gekennzeichnet daß das Monomerengemisch nur eine Verbindung der allgemeinen Formel CH₂=CH-R⁷ enthält.

3. Polymere nach Anspruch 1 oder 2, dadurch gekennzeichnet, daß in den Monomeren der allgemeinen Formel CH₂=CH-R⁷ die Gruppe R⁷ eine aliphatische Hydrocarbenylgruppe ist, die nicht mehr als 10 Kohlenstoffatome enthält.

4. Polymere nach einem der vorstehenden Ansprüche 1 bis 3, dadurch gekennzeichnet, daß die Monomere der allgemeinen Formel CH₂=CH-R⁷ unverzweigte α,ω-Diolefine sind.

5. Polymere nach Anspruch 4, dadurch gekennzeichnet, daß die unverzweigten α,ω-Diolefine unter Hexadien-1,5, Heptadien-1,6 und Octadien-1,7 ausgewählt sind.

6. Verfahren zur Herstellung von Polymeren, dadurch gekennzeichnet, daß Polymere nach Anspruch 1 durch Inkontaktbringen der Monomere mit einer Katalysatorzusammensetzung hergestellt werden, die ein Gruppe VIII-Metall und einen Phosphorbidentatliganden der allgemeinen Formel R⁸R⁹P-R-PR¹⁰R¹¹ enthält, worin R⁸ bis R¹¹ gleiche oder verschiedene, gegebenenfalls polar substituierte aliphatische Hydrocarbylgruppen bedeuten und R eine zweiwertige Brückengruppe darstellt, die wenigstens zwei Kohlenstoffatome in der die beiden Phosphoratome verknüpfenden Brücke enthält.

7. Verfahren nach Anspruch 6, dadurch gekennzeichnet, daß die Katalysatorzusammensetzung den Phosphorbidentatliganden in einer Menge von 0,5 bis 2 Mol je Grammatom Gruppe VIII-Metall enthält.

8. Verfahren nach Anspruch 6 oder 7, dadurch gekennzeichnet, daß die Katalysatorzusammensetzung zusätzlich ein Anion einer Säure mit einem pKa-Wert von kleiner als 4 in der Form einer Säure und/oder eines Salzes enthält.

9. Verfahren nach Anspruch 8, dadurch gekennzeichnet, daß das Anion einer Säure mit einem pKa-Wert von kleiner als 4 in die Katalysatorzusammensetzung in einer Menge von 1 bis 100 Mol je Grammatom Gruppe VIII-Metall aufgenommen wird.

10. Verfahren nach einem oder mehreren der Ansprüche 6-9, dadurch gekennzeichnet, daß die Polymerisation durch Inkontaktbringen der Monomere mit einer Lösung der Katalysatorzusammensetzung in einem Verdünnungsmittel, worin die Polymere unlöslich oder praktisch unlöslich sind, bei einer Temperatur von 20-150°C, einem Druck von 2-150 bar und einem Molverhältnis der olefinisch ungesättigten Verbindungen zu Kohlenmonoxid von 10:1 bis 1:10 und unter Anwendung einer Menge an Katalysatorzusammensetzung ausgeführt wird, die je Mol olefinisch ungesättigter, zu polymerisierender Verbindung 10⁻⁷ bis 10⁻³ Grammatom Gruppe VIII-Metall enthält.

## Revendications

1. Polymères du monoxyde de carbone avec un ou plusieurs composés oléfiniquement insaturés, caractérisés en ce que
a) on peut les préparer par la copolymérisation du monoxyde de carbone avec, à titre de composés oléfiniquement insaturés, exclusivement une ou plusieurs α,ω-dioléfines de la formule générale CH₂=CH-R⁷ dans laquelle R⁷ représente un radical hydrocarbényle contenant une double liaison oléfinique et dans lesquelles α,ω-dioléfines les deux doubles liaisons oléfiniques sont non conjuguées et
b) dans les chaînes polymériques, une unité provenant du monoxyde de carbone est présente sensiblement de chaque côté de chaque unité provenant d'une α,ω-dioléfine.

2. Polymères suivant la revendication 1, caractérisés en ce que le mélange des monomères ne contient seulement qu'un seul composé de la formule générale CH₂=CH-R⁷.

3. Polymères suivant la revendication 1 ou 2, caractérisés en ce que, dans les monoméres de la formule générale CH₂=CH-R⁷, le groupe R⁷ est un radical hydrocarbénylaliphatique ne contenant pas plus de 10 atomes de carbone.

4. Polymères suivant une ou plusieurs des revendications 1 à 3, caractérisés en ce que les monomères de la formule générale CH₂=CH-R⁷ sont des α,ω-dioléfines non ramifiées.

5. Polymères suivant la revendication 4, caractérisés en ce que les α,ω-dioléfines non ramifiées sont choisies parmi l'hexadiène-1,5, l'heptadiène-1,6 et l'octadiène-1,7.

6. Procédé de préparation de polymères, caractérisé en ce que l'on prépare les polymères suivant la revendication 1, par la mise en contact des monomères avec une composition catalytique contenant un métal du groupe VIII et un ligand bidentate du phosphore de la formule générale R⁸R⁹P-R-PR¹⁰R¹¹ dans laquelle les symboles R⁸ à R¹¹ représentent des radicaux hydrocarbyle aliphatiques identiques ou différents et éventuellement à substitution polaire et R représente un groupe de pontage bivalent contenant au moins deux atomes de carbone dans le pont reliant les deux atomes de phosphore.

7. Procédé suivant la revendication 6, caractérisé en ce que la composition catalytique contient le ligand bidentate du phosphore, en une proportion de 0,5 à 2 moles par atome-gramme de métal du groupe VIII.

8. Procédé suivant la revendication 6 ou 7, caractérisé en ce que la composition catalytique contient en outre un anion d'un acide qui possède un pKa inférieur à 4, sous la forme d'un acide et/ou d'un sel.

9. Procédé suivant la revendication 8, caractérisé en ce que l'anion d'un acide qui possède un pKa inférieur à 4 est incorporé à la composition catalytique, en une proportion de 1 à 100 moles par atome-gramme de métal du groupe VII.

10. Procédé suivant une ou plusieurs des revendications 6 à 9, caractérisé en ce que l'on entreprend la polymérisation par la mise en contact des monomères avec une solution de la composition catalytique dans un diluant dans lequel les polymères sont insolubles ou virtuellement insolubles, à une température de 20 à 150°C, sous une pression de 2 à 150 bars et avec un rapport molaire des composés oléfiniquement insaturés au monoxyde de carbone de 10:1 à 1:10 et en utilisant une proportion de la composition catalytique, qui, par mole de composés oléfiniquement insaturé à polymériser, contient de 10⁻⁷ à 10⁻³ atome-gramme de métal du groupe VII.
